# EUROPEAN PATENT SPECIFICATION

(11) **EP 0 981 498 B1**
(45) Date of publication and mention of the grant of the patent: **19.12.2001**
(21) Application number: 98920678.4
(22) Date of filing: 11.05.1998
(51) Int. Cl.: C01F 17/00, C01G 25/00, C01B 13/36, C01G 49/00, H01M 8/12, B01J 37/03

(54) **LOW TEMPERATURE PRODUCTION OF METAL OXIDES**
HERSTELLUNG VON METALLOXIDEN BEI NEIDERIGER TEMPERATUR
PRODUCTION A BASSE TEMPERATURE D'OXYDES METALLIQUES

(30) Priority: 10.05.1997 GB 9709449
(43) Date of publication of application: 01.03.2000
(73) Proprietor: THE UNIVERSITY OF WARWICK, Coventry, West Midlands, CV4 7AL (GB)
(72) Inventor: BHATTACHARYA, Ashok, Kumar, Birmingham West Midlands B13 9RY (GB); HARTRIDGE, Adrian, West Midlands CV5 6FD (GB)
(74) Representative: McNeeney, Stephen Phillip
(86) International application number: GB9801355
(87) International publication number: WO9851617

(56) References cited:
- EP-A- 0 403 104
- US-A- 4 636 378
- US-A- 4 775 412
- US-A- 5 032 555
- US-A- 5 091 348

## Description

The present invention relates to the field of the preparation of solid solutions of metal oxides.

Lanthanide doped CeO₂ possesses the fluorite structure over a range of dopant concentrations. The substitution range of fluorite structure stability depends on the individual dopant. Partial replacement of Ce^{IV} ions with Ln^{III} ions in the lattice creates a corresponding number of anion vacancies and the resulting solid solutions have high ionic conductivity. As such, they have been widely studied with possible applications as oxygen sensors and in electrochemical fuel cells. In particular, such solid solutions can have applicability in the preparation of catalytic materials on high surface area ceramic catalyst support material.

The magnitude of conductivity of such ceria compounds and the like does not increase linearly with increasing dopant concentration, but increases to a maximum between 10 and 20 mole percent, before falling off sharply. The magnitude of the maximum in turn depends on the ionic radius of the dopant. Some authors have attempted to explain these phenomena in terms of oxygen vacancy―dopant cation pairs and the clustering of oxygen ion vacancies. These authors use various theoretical models in order to calculate the ionic conductivity of these materials and to compare them with experimental data.

In the prior art, solid solutions of this type are prepared by ceramic powder processing techniques where oxides and/or nitrates are intimately ground and fired at temperatures of between 1200°C and 1600°C for a prolonged period of time in order to achieve homogeneity. However, such techniques are fundamentally disadvantaged since prolonged heating at high temperatures often causes considerable metal evaporation and oxygen loss making it difficult to maintain the required compositional stoichiometry. Due to the point defects thus created, the behaviour of these materials deviates from their expected behaviour.

US Patent No. 4,606,847 describes a process for the production of dispersible ceria-based product in which substantially dry cerium (IV) oxide hydrate is heated in the presence of a salt (e.g. a metal salt such as a nitrate or a chloride) causing deaggregation of aggregated crystallites. Metal salts which are specifically mentioned include yttrium nitrate. In the preparation of the dispersible products, the presence of free water in the cerium (IV) oxide hydrate is explicitly excluded. Moreover, neither the particle size of the deaggregated crystallites, nor the use of non-ceria-based systems, is mentioned.

The preparation of solid solutions of lanthanide-doped cerium (IV) oxide with the fluorite structure and a crystallite size of approximately 6 nm *via* a novel low temperature sol-gel route has been described in J. Mat. Science **31,** 5005 (1996). In this method Ce(NO₃)₃.6H₂O is simultaneously precipitated and chemically oxidised to produce a cerium (IV) oxide hydrate with a crystallite size of approximately 5 nm. This is then impregnated with the required quantity of lanthanide nitrate and the dried mixture heated in a muffle furnace under strict time and temperature parameters. It is then necessary to powder the resultant solid before it may be dispersed in distilled water to form a sol, and dried to yield a glassy gel. Moreover, the use of metal oxide systems other than those based on cerium-lanthanide is not mentioned.

Surprisingly, we have found that gels of metal oxides, including mixed metal oxides, can be produced in a nanocrystalline and substantially dispersible form *via* a novel low temperature process which comprises *inter alia* heating a wet mixture of metal oxide and either metal salt or hydrolytic acid, followed by subsequent heating under a controlled pressure atmosphere.

According to the invention, there is thus provided a process for the preparation of a metal oxide gel product, which process includes the steps of:
(a) heating a mixture of a wet hydrous metal oxide and either:
   (i) a hydrolytic acid; or
   (ii) a metal salt;
   to form a wet gel of the hydrous metal oxide;
(b) heating the wet gel under a controlled pressure atmosphere to the decomposition temperature of the acid or salt as appropriate; and
(c) removing any non-dispersible product,
   which process is hereinafter referred to as "the process according to the invention".

We have found that, by employing the process according to the invention, metal oxide gel products may be obtained which are both nanocrystalline and substantially dispersible in an appropriate solvent system without the need for physical deaggregation means, such as powdering.

Thus, according to a further aspect of the invention there is provided a substantially dispersible nanocrystalline metal oxide gel product.

By "wet" hydrous metal oxides and gels thereof, we mean compositions comprising a hydrous metal oxide and water, wherein the water is present in excess of 0% w/w, and preferably between 10 and 200% w/w, of the metal oxide, whether coordinated to the metal ions of the metal oxide system or otherwise.

By "non-dispersible product" we mean product, produced after heating the wet gel under a controlled pressure atmosphere, which is of a particle size which is too great to allow it to enter the colloidal state.

Although the process according to the invention can be used to prepare metal oxide gel products which are capable of being dispersed to a degree of above 95%, by "substantially dispersible" we mean a metal oxide gel product which, upon formation, is capable of being dispersed to a degree of above 10%, preferably above 40%, more preferably above 60%, in an appropriate solvent (e.g. aqueous solvents including water or aqueous acid solutions) without the need for further physical deaggregation.

By "nanocrystalline" we mean a metal oxide gel product with a high degree of nanocrystallinity, i.e. in which no more than 1 % of the crystallites exceed a particle size of 500 nm and in which the average crystallite sizes (Zₐᵥ) are in the range 3 to 250 nm.

We have also found, surprisingly, that the process according to the invention has the advantage that it may be used to form gel products of an unexpectedly wide variety of metal oxide systems including lanthanide oxide systems (including, but not limited to, those of lanthanum, cerium, gadolinium, neodymium and praeseodymium), transition metal oxides (including, but not limited to, those of yttrium, zirconium, iron, palladium, nickel, titanium and chromium) and even oxides of main group metals (including, but not limited to, magnesium and aluminium). Moreover, the process according to the invention may be used to prepare mixed oxides of two or more of the abovementioned metals.

Further, the process according to the invention may be used to prepare gel products at low temperatures which possess a high degree of accuracy in the desired compositional stoichiometry and a minimal point defect concentration.

Thus, according to a further aspect of the invention, there is provided a product obtainable by the process according to the invention.

In the process according to the invention, the wet gel comprising the hydrous metal oxide may be formed by heating a mixture of wet hydrous oxide and hydrolytic acid or metal salt, in the desired proportions. It is preferred that the heating is performed under atmospheric pressure (i.e. in an open atmosphere, rather than in a sealed vessel).

In the formation of the wet gel, the mixture should be heated until it is sufficiently dried such that it forms an gel which is of a soft and/or crumbly consistency. The temperature at, and length of time over, which the mixture should be heated will depend upon the composition of the mixture and the degree of hydration (i.e. "wetness") of the hydrous metal oxide. However, suitable temperatures are in the range room temperature to 120°C, preferably 40 to 110°C and more preferably 55 to 105°C, and suitable time periods are in the range 1 to 24, preferably 1 to 6, more preferably 1.5 to 5 and especially 1.75 to 4.5 hours.

Preferred metal salts which may be used in the process according to the invention include metal nitrates, metal chlorides, metal perchlorates and metal acetates. However, we particularly prefer the metal salt to be a metal nitrate or a metal chloride.

Appropriate wet hydrous metal oxides, metal salts and hydrolytic acids are commercially available, are well known in the literature or are readily available using techniques which are well known to those skilled in the art, such as those described hereinafter.

Appropriate vessels which may be used to heat the mixture to form the wet gel will be well known to those skilled in the art and include standard evaporating dishes made from an appropriate material (e.g. pyrex).

In the process according to the invention, the wet gel may be heated under a controlled pressure atmosphere by, for example, sealing in an appropriate reaction vessel. Reaction vessels which may be employed include a pressure reactor vessels (e.g. autoclaves). The skilled person will appreciate that the reaction vessel may be composed of appropriate materials, which may depend upon the constituents of the wet gel. For example, if the wet gel is not formed from a reaction mixture which includes a hydrolytic acid, a stainless steel reaction vessel may be employed. However, if a hydrolytic acid is employed it may be necessary to employ a vessel lined with an appropriately inert material (e.g. quartz).

The wet gel is heated under a controlled pressure atmosphere to the decomposition temperature of the acid or salt as appropriate. This is typically in the region of 220 to 330°C, for example 305 to 320°C, for metal nitrates, and 100 to 180°C, for example 145 to 155°C, for hydrolytic acids. Suitable heating rates are in the region 175 to 225°C per hour, for example 200°C per hour. The wet gel may be heated for between 20 and 75 minutes, preferably 25 to 65 minutes at the appropriate temperature. The decomposition of the salt or acid as appropriate may be monitored *via* an appropriate means (e.g. by observing the presence of an endotherm by means of a temperature and/or a pressure gauge).

In the process according to the invention, any non-dispersible product which is formed upon heating the wet gel under a controlled pressure atmosphere may be removed *via* appropriate means which will be well known to those skilled in the art.

For example, any non-dispersible product may be removed by dispersing the metal oxide gel, formed by heating the wet gel, in an appropriate solvent to form a sol. Before dispersing the resultant solid in an appropriate solvent to form a sol, the reaction vessel may be cooled to an appropriate temperature (e.g. less than 60°C). Appropriate solvents into which the metal oxide may be dispersed include aqueous solvents, especially distilled water. Dispersion may take place with stirring over an appropriate period (e.g. approximately 1 hour) followed by standing over 2 hours. Any non-dispersible sediment may then be removed by an appropriate means (e.g. decanting the supernatant).

In order to obtain substantially dispersible gel, the resultant sol may subsequently be dried at an appropriate temperature depending upon the system which is used. Suitable temperatures are in the range 20 to 125°C, preferably 25 to 105°C. The sol should be sufficiently dried until a gel product is formed which may have a glassy looking, transparent consistency.

The substantially dispersible and nanocrystalline metal oxide gel products so formed may be used in the formation of solid solutions of metal oxides by heating to an appropriate temperature. The small crystallite size and freedom from agglomerates allow the products to densify at a low temperature (e.g. less than 1000°C, for example between 600 and 800°C). Alternatively, the gel product may be redispersed into an appropriate solvent to form a sol, which may then be used to coat or impregnate a variety of substrates in order to yield a coating which is both homogeneous and nanocrystalline in nature. For example, an appropriate substantially dispersible metal oxide gel product may be dispersed onto a catalyst support to form a catalyst. Other layered materials comprising coated substrates may be readily produced in a similar fashion. The coated substrates may be used to form a variety of devices, such as fuel cells.

The invention is illustrated, but in no way limited, by way of the following examples.

### General Experimental Procedure for Formation of Dispersible Gels

1. Wet hydrous oxide was mixed with either a hydrolytic acid (e.g. hydrochloric, nitric or acetic) or at least one metal salt, as appropriate in the desired proportions. The resultant mixture was then dried by heating to yield a soft, crumbly "wet" gel of the hydrous metal oxide comprising excess water in a pyrex evaporating dish.
2. The wet gel was then loaded, in 0.5 cm pieces, into a pressure reactor vessel to a 2 cm bed depth. The reactor was then sealed.
3. The vessel was heated at a heating rate of about 200°C per hour for between 30 and 60 minutes to the decomposition temperature of the salt or the acid. Pressure was released as necessary.
   Decomposition of the nitrate or acid was typically observed as an endotherm.
4. The vessel was cooled to below 60°C and then opened.
5. The resultant solid was then dispersed with stirring into distilled water over 1 hour, and was then allowed to stand for about two hours and/or centrifuged as necessary. If necessary, an acid (such as hydrochloric, nitric or acetic acid) was added in an appropriate amount to the resultant sol in order to stabilise the dispersion. Any sediment which formed was discarded, by decanting the supernatant.
6. The product was then dried at between room temperature and 105°C to give a glassy, dispersible gel. The conductivity and the pH of the gel was measured.
7. The gels could then be:
   (a) densified to form ceramic materials by heating to an appropriate temperature; or
   (b) redispersed in an appropriate solvent system to form a sol which could be used to coat a substrate.

### Characterisation

### Morphology and elemental analysis

This was carried out on dried gel or calcine samples using out a JEOL scanning electron microscope operating at 20 kV and equipped with an energy dispersive x-ray analyzer. Conducting samples were prepared by either carbon coating or gold sputtering finely ground powder specimens.
Both broad beam and point EDX analysis of powder particles were performed using pure manganese as a reference standard.

X-ray powder diffraction patterns of the samples were recorded in the region of 2θ = 10-80° with a scanning speed of ¼°/min on a Philips diffractometer using CuK_{α} radiation with a nickel filter. The average crystallite size of each composition was calculated from the broadening of a specific diffraction peak using the well-known Scherrer equation, D = kλ/h_{½}cosθ, where D = average size of the crystallites, k = Scherrer constant, λ = wavelength of radiation, h_{½} = peak width at half height and θ corresponds to the peak position.

### Particle Size

This was measured in solution by photon correlation spectroscopy or on solid samples by transition electron microscopy.

### Example 1

### Zirconium-Lanthanum Mixed Oxide

### (a) ZrO(OH)₂.xH₂O Hydrate Gel

Small quantities of zirconium basic carbonate (total quantity 60 g) were added to 6M HNO₃ (43 mL). A further portion of zirconium basic carbonate (40 g) was then slurried with water before adding to the acid mixture. The mixture was heated with stirring and after 10 to 15 minutes a clear sol developed. After diluting with distilled water (500 mL) and stirring for 20 minutes, the mixture was allowed to cool to room temperature. 880 ammonia (23 mL) was then added to water (880 mL) with stirring. The zirconium sol was added slowly to this mixture over 10 minutes with stirring. The resultant was allowed to settle and the supernatant decanted off. The sol was washed 4 times with 2 L of distilled water. The resultant gel was decanted to 900 mL, and 100 mL of HNO₃ was added. The mixture was centrifuged and the supernatant discarded to leave acid conditioned ZrO(OH)₂.xH₂O hydrate gel.

### (b) Zirconium-Lanthanum Mixed Oxide

Prepared from ZrO(OH)₂.xH₂O hydrate gel (126 g; from step (a) above, dried to a firm gel at 40°C) and La(NO₃)₃.5H₂O (5.69 g) in the presence of water (about 10 mL), heating in the autoclave to 315°C. The sediment was removed by dispersing the resultant gel in distilled water (200 mL) and decanting. After evaporating the water at 45°C, the resultant gel was redispersed (100% dispersible) to give a clear sol with a conductivity of 7.9 mmho and a pH of 3.9. The sol was evaporated at 100°C to give a dry gel. XRD performed at 800°C on the dry gel revealed a solid solution of the following stoichiometry: Zr_{0.8}La_{0.2}O_{2-δ}.

### Example 2

### Zirconium-Yttrium Mixed Oxide I

Prepared from ZrO(OH)₂.xH₂O hydrate gel (126 g; see Example 1(a) above) and Y(NO₃)₃.5H₂O (2.95 g) in the presence of water (about 10 mL), drying in an evaporating dish at 40 to 50°C and heating in an autoclave to 315°C. The sediment was removed by dispersing the resultant gel in distilled water (400 mL) and decanting. After evaporating the water at 105°C, the resultant gel was redispersed (100% dispersible) to give a clear sol with a conductivity of 14.28 mmho and a pH of 2.4. The sol was evaporated at 100°C to give a dry gel. XRD perform at 600°C on the dry gel revealed a solid solution of the following stoichiometry: Zr_{0.9}Y_{0.1}O_{2-δ}.

### Example 3

### Zirconium-Yttrium Mixed Oxide II

Prepared from ZrO(OH)₂.xH₂O hydrate gel (163.4 g; see Example 1(a) above) and Y(NO₃)₃.5H₂O (4.7 g) in the presence of water (about 15 mL), drying in an evaporating dish at 105 °C and heating in an autoclave to 310°C over 45 minutes. The sediment was removed by dispersing the resultant gel in distilled water (1.5 L; giving a sol with a conductivity of 4.43 mmho and a pH of 2.3) and decanting. After evaporating the water at 105°C, and then at room temperature, the resultant gel was redispersed (100% dispersible) to give a clear sol. PCS measurements revealed a Zₐᵥ of 35 nm.

### Example 4

### Aluminium-Yttrium Mixed Oxide

### (a) AlO(OH) Hydrate Gel

Prepared analogously to the method described in Example 1(a) above from Al(NO₃)₃.9H₂O (134 g) in water (500 mL) and ammonium hydroxide (23 mL) in water (1 L).

### (b) Aluminium-Yttrium Mixed Oxide

Prepared from AlOOH hydrate gel (171.21 g; from step (a) above) and Y(NO₃)₃.5H₂O (17.27 g) in the presence of water (about 20 mL), drying in an evaporating dish at 100°C and heating in an autoclave to 315°C for 15 minutes. The sediment was removed by dispersing the resultant gel in distilled water (200 mL) and decanting. The water was evaporated to give a glassy dispersible gel.

### Example 5

### Cerium-Praeseodymium-Lanthanum Mixed Oxide

Prepared from CeO₂ hydrate gel (50 g), Pr(NO₃)₃.6H₂O (24.98 g) and La(NO₃)₃.5H₂O (5.96 g) in the presence of water (about 10 mL), drying in an evaporating dish at 105°C and heating in an autoclave to 310°C for 30 minutes. The sediment was removed by dispersing the resultant gel in distilled water (4 L) and decanting. After evaporating the water at 105°C, the resultant gel was redispersed to form an excellent sol with a conductivity of 5.44 mmho and a pH of 4.2. XRD performed at 600°C showed what appeared to be a single phase: Ce_{0.75}La_{0.05}Pr_{0.20}O_{2-δ}.

### Example 6

### Cerium-Praeseodymium Mixed Oxide

Prepared from CeO₂ hydrate gel (50 g) and Pr(NO₃)₃.6H₂O (15.62 g) in the presence of water (enough to dissolve at 30°C). The mixture was left to stand for 8 hours, dried in an evaporating dish at 105°C and heated in an autoclave to 320°C for 75 minutes. The sediment was removed by dispersing the resultant gel in distilled water (1.5 L), adding IN HNO₃ to give a pH of 1.8 and decanting. After evaporating the water at 105°C, the resultant product was redispersed (100% dispersible) to form an excellent sol with a conductivity of 7.32 mmho and a pH of 2.2.

### Example 7

### Zirconium-Titanium Mixed Oxide

### (a) TiO(OH)₂ Hydrate Gel

Prepared analogously to the method described in Example 1(a) above from TiCl_{2.8} (27.35% solution in water (100 mL)), which was slowly added at room temperature to a solution of ammonium hydroxide (6M; 400 mL) in water (500 mL).

### (b) Zirconium-Titanium Mixed Oxide

Prepared from TiO(OH)₂ hydrate gel (from step (a) above) and ZrO(OH)₂.xH₂O hydrate gel (see Example 1(a) above) (both hydrates being analyzed by thermogravimetric analysis for oxide content and mixed together in an appropriate amount to give a 1:1 mixture) and HNO₃ (conc.; 3.9 g) in the presence of water (10 mL). This was followed by drying in an evaporating dish at room temperature and heating in an autoclave to 150°C for 30 minutes. The sediment was removed by dispersing the resultant gel in distilled water (1.5 L; giving a translucent sol with a conductivity of 4.64 mmho and a pH of 2.0) and decanting. After evaporating the water, redispersion of the resultant gel gave a sol with conductivity of 9.7 mmho and a pH of 1.7. PCS measurements revealed a Zₐᵥ of 140 nm.

### Example 8

### Aluminium-Magnesium Mixed Oxide

Prepared from AlO(OH) hydrate gel (20 g; see Example 4(a) above) and Mg(NO₃)₂.6H₂O (38.41 g) in the presence of water (35 mL), drying in an evaporating dish at 105°C and heating in an autoclave to 315 to 321°C for about 45 minutes, then at 330°C for a further 45 minutes. The sediment was removed by dispersing the resultant gel in distilled water, acidifying with 1M HNO₃ (to pH 3.5) and decanting. The water was evaporated to give a glassy dispersible gel.

### Example 9

### Zirconium-Titanium-Gadolinium Mixed Oxide

Prepared from TiO(OH)₂ hydrate gel (see Example 6(a) above) and ZrO(OH)₂.xH₂O hydrate gel (see Example 1(a) above) and Gd(NO₃)₃ (all three hydrates being analyzed by thermogravimetric analysis for oxide content and mixed together in an appropriate amount to give a 1:1:0.2 mixture) in the presence of water (25 mL), drying in an evaporating dish at 40°C and heating in an autoclave to 310°C for 30 minutes. The sediment was removed by dispersing the resultant gel in distilled water (3 L; giving a translucent sol with a conductivity of 3.47 mmho and a pH of 4.7) and decanting. After evaporating the water, redispersion of the resultant gel gave a sol with conductivity of 7.66 mmho and a pH of 4.7.

### Example 10

### Cerium-Lanthanum-Zirconium Mixed Oxide

Prepared from CeO₂ hydrate gel (25 g), ZrO(NO₃)₂.xH₂O hydrate gel (4.48 g) and La(NO₃)₂.5H₂O (5.59 g) in the presence of water (enough to just dissolve), drying in an evaporating dish at 105°C and heating in an autoclave to 310°C for 45 minutes, followed by 317°C for a further 30 minutes. The sediment was removed by dispersing the resultant gel in distilled water (1.5 L), acidifying with HNO₃ (to a pH of 1.8) and decanting. After evaporating the water, redispersion of the resultant gel gave an excellent sol. PCS measurements revealed a Zₐᵥ of 15-20 nm.

### Example 11

### Cerium-Zirconium Mixed Oxide

Prepared from CeO₂ hydrate gel (25 g) and ZrO(NO₃)₂.xH₂O (6.33 g) in the presence of water (about 15 mL), drying in an evaporating dish at 105°C and heating in an autoclave to 250°C for 45 minutes, followed by 310°C for a further **45** minutes. The sediment was removed by dispersing the resultant gel in distilled water (1.5 L) acidifying with HNO₃ (5 mL), heating to 105°C overnight, allowing the sol to cool and settle and decanting. The water was evaporated to give a glassy dispersible gel.

### Example 12

### Nickel-Iron Mixed Oxide

### (a) FeO(OH).xH₂O

Prepared analogously to the method described in Example 1(a) above from Fe(NO₃)₃.9H₂O (100 g) in water (1 L) and ammonium hydroxide (6M; 500 mL).

### (b) Nickel-Iron Mixed Oxide

Prepared from FeO(OH).xH₂O (46.02 g; from step (a) above) and Ni(NO₃)₂.6H₂O (3.62 g) in the presence of water (about 10 mL), drying carefully at 40°C in an evaporating dish and heating in an autoclave to 315°C for 30 minutes. The sediment was removed by dispersing the resultant gel in distilled water (1.5 L) and decanting. The water was evaporated to give a glassy dispersible gel.

### Example 13

### Zirconium-Nickel Mixed Oxide

Prepared from ZrO(OH)₂.xH₂O hydrate gel (114.8 g) and Ni(NO₃)₂.6H₂O (4 g) in the presence of water (about 20 mL), drying in an evaporating dish between room temperature and 40°C and heating in an autoclave to 310°C for 15 minutes. The sediment was removed by dispersing the resultant gel in distilled water (800 mL), centrifuging and decanting.
After evaporating the water, the resultant product was redispersed to give a translucent greenish sol. PCS measurements revealed a Zₐᵥ of 40-70 nm.

### Example 14

### Zirconium-Neodymium Mixed Oxide

Prepared from ZrO(OH)₂.xH₂O hydrate gel (115.7 g) and Nd(NO₃)₃.6H₂O (6.93 g) in the presence of water (about 10 mL), drying in an evaporating dish between room temperature and 105°C and heating in an autoclave to 300°C for 30 minutes. The sediment was removed by dispersing the resultant gel in distilled water (1 L), centrifuging and decanting. After evaporating the water, the resultant product was redispersed to give a translucent greenish sol with a conductivity of 5.63 mmho and a pH of 2.8. PCS measurements revealed a Zₐᵥ of 35-55 nm.

### Example 15

### Cerium-Yttrium Mixed Oxide

Prepared from CeO₂ hydrate gel (73.5%; 25 g), Y(NO₃)₃.5H₂O (7.79 g) in the presence of water (about 5 mL), drying in an evaporating dish at and heating in an autoclave to 310°C for 40 minutes. The sediment was removed by dispersing the resultant gel in distilled water (800 L), adjusting the pH to 2.4 with HNO₃, centrifuging and decanting. The water was evaporated to give a glassy green dispersible gel. PCS measurements revealed a Zₐᵥ of 12 nm.

### Example 16

### Dispersion of Zirconium-Nickel Mixed Oxide on Silica

A sol was made from the zirconium-nickel mixed oxide of Example 13 and water (6 mL). The sol was added dropwise onto silica (Crosfield C500; 1 g) until the silica was just damp but not wet (about 2.05 mL added). The resultant was dried at 105°C and the procedure repeated twice until the total volume of the sol had been added. This resulted in a thin, homogeneous, nanocrystalline coating of the oxide on the silica.

## Claims

1. A process for the preparation of a metal oxide gel product, which process includes the steps of:
(a) heating a mixture of a wet hydrous metal oxide and either:
(i) a hydrolytic acid; or
(ii) a metal salt;
to form a wet gel;
(b) heating the wet gel under a controlled pressure atmosphere to the decomposition temperature of the acid or salt as appropriate; and
(c) removing any non-dispersible product.

2. A process as claimed in Claim 1, **characterised in that** the metal salt is a metal nitrate.

3. A process as claimed in any one of the preceding claims, **characterised in that** the wet gel is formed by heating the wet hydrous metal oxide mixture to between room temperature and 120°C.

4. A process as claimed in any one of the preceding claims, **characterised in that** the wet gel is formed by heating the wet hydrous metal oxide for between 1 and 24 hours.

5. A process as claimed in any one of the preceding claims, **characterised in that** the controlled atmosphere is provided by means of a pressure reactor vessel.

6. A process as claimed in any one of the preceding claims, **characterised in that** wet gel is heated for between about 20 and 75 minutes.

7. A process as claimed in any one of the preceding claims, **characterised in that** wet gel is heated at a heating rate of between 175 and 225°C per hour.

8. A process as claimed in any one of the preceding claims, **characterised in that** non-dispersible product is removed by:
(a) dispersing the metal oxide gel formed by heating the wet gel, in a solvent to form a sol;
(b) removing any non-dispersible sediment; and
(c) drying the sol.

9. A process as claimed in Claim 8, **characterised in that** the metal oxide gel is cooled under a controlled atmosphere to below 60°C before dispersing.

10. A process as claimed in Claim 8 or Claim 9, **characterised in that** the solvent is aqueous.

11. A process as claimed in any one of Claims 8 to 10, **characterised in that** the sol is dried at between 20 and 125°C.

12. A substantially dispersible nanocrystalline metal oxide gel product obtainable by a process according to any one of Claims 1 to 11, provided that the product is not a tin oxide solid solution containing antimony.

13. A substantially dispersible nanocrystalline metal oxide gel product, provided that the product is not a tin oxide solid solution containing antimony.

14. A process for the formation of a solid solution of a metal oxide which process comprises heating a product according to Claim 12 or Claim 13.

15. The use of a product according to Claim 12 or Claim 13 in the manufacture of a solid solution of a metal oxide.

16. A process for the formation of a catalyst, which process comprises dispersing a product according to Claim 12 or Claim 13 onto a catalyst support.

17. The use of a product as claimed in Claim 12 or Claim 13 in the manufacture of a catalyst.

18. A catalyst comprising a product according to Claim 12 or Claim 13 and a catalyst support.

19. The use of a product as claimed in Claim 12 or Claim 13 in the manufacture of a fuel cell.

20. The use of a product as claimed in Claim 12 or Claim 13 to coat or impregnate a substrate.

21. A layered material comprising a substrate coated with a product as claimed in Claim 12 or Claim 13.

## Patentansprüche

1. Verfahren zur Herstellung eines Metalloxidgelprodukts, wobei das Verfahren die Schritte aufweist:
(a) Erwärmen einer Mischung eines nassen wasserhaltigen Metalloxids und entweder:
(i) einer hydrolytischen Säure oder
(ii) eines Metallsalzes,
um ein nasses Gel auszubilden,
(b) Erwärmen des nassen Gels unter einer Atmosphäre mit geregeltem Druck auf die Zersetzungstemperatur der Säure bzw. des Salzes und
(c) Entfernen aller nicht-dispergierbaren Produkte.

2. Verfahren nach Anspruch 1, **dadurch gekennzeichnet, dass** das Metallsalz ein Metallnitrat ist.

3. Verfahren nach einem der vorangehenden Ansprüche, **dadurch gekennzeichnet, dass** das nasse Gel durch Erwärmen der nassen wässrigen Metalloxidmischung auf eine Temperatur zwischen Raumtemperatur und 120 °C ausgebildet wird.

4. Verfahren nach einem der vorangehenden Ansprüche, **dadurch gekennzeichnet, dass** das nasse Gel durch Erwärmen des naasen wässrigen Metalloxids für 1 bis 24 Stunden ausgebildet wird.

5. Verfahren nach einem der vorangehenden Ansprüche, **dadurch gekennzeichnet, dass** die geregelte Atmosphäre mittels eines Druckreaktorbehälters bereitgestellt wird.

6. Verfahren nach einem der vorangehenden Ansprüche, **dadurch gekennzeichnet, dass** das nasse Gel für einen Zeitraum zwischen 20 und 57 Minuten erwärmt wird.

7. Verfahren nach einem der vorangehenden Ansprüche, **dadurch gekennzeichnet, dass** das nasse Gel mit einer Aufheizrate zwischen 175 und 225 °C pro Stunde erwärmt wird.

8. Verfahren nach einem der vorangehenden Ansprüche, **dadurch gekennzeichnet, dass** das nicht dispergierbare Produkt entfernt wird durch:
(a) Dispergieren des Metalloxidgels, das durch Erwärmen des nassen Gels ausgebildet wurde, in einem Lösungsmittel, um eine Lösung auszubilden,
(b) Entfernen jeglichen nicht dispergierbaren Sediments und
(c) Trocknen der Lösung.

9. Verfahren nach Anspruch 8, **dadurch gekennzeichnet, dass** das Metalloxidgel vor dem Dispergieren unter einer geregelten Atmosphäre auf unter 60 °C abgekühlt wird.

10. Verfahren nach Anspruch 8 oder 9, **dadurch gekennzeichnet, dass** das Lösungsmittel wässrig ist.

11. Verfahren nach einem der Ansprüche 8 bis 10, **dadurch gekennzeichnet, dass** die Lösung bei einer Temperatur zwischen 20 und 125 °C getrocknet wird.

12. Im wesentlichen dispergierbares nanokristallines Metalloxidgelprodukt, das durch ein Verfahren gemäß einem der Ansprüche 1 bis 11 erhalten werden kann, vorausgesetzt, dass das Produkt keine Zinnoxidfestlösung ist, die Antimon enthält.

13. Im wesentlichen dispergierbares nanokristallines Metalloxidgelprodukt, vorausgesetzt, dass das Produkt keine Zinnoxidfestlösung ist, die Antimon enthält.

14. Verfahren zur Ausbildung einer Festlösung eines Metalloxids, wobei das Verfahren das Erwärmen eines Produkts gemäß einem der Anspruche 12 oder 13 umfasst.

15. Verwendung eines Produkts gemäß Anspruch 12 oder Anspruch 13 bei der Herstellung einer Festlösung eines Metalloxids.

16. Verfahren zur Ausbildung eines Katalysators, wobei das Verfahren das Dispergieren eines Produkts gemäß Anspruch 12 oder Anspruch 13 auf einem Katalysatorträger umfasst.

17. Verwendung eines Produkts nach Anspruch 12 oder Anspruch 13 in der Herstellung eines Katalysators.

18. Katalysator, der ein Produkt gemäß Anspruch 12 oder Anspruch 13 und einen Katalysatorträger umfasst.

19. Verwendung eines Produkts nach Anspruch 12 oder Anspruch 13 in der Herstellung einer Brennstoffzelle.

20. Verwendung eines Produkts nach Anspruch 12 oder Anspruch 13, um ein Substrat zu beschichten oder zu imprägnieren.

21. Schichtmaterial, das ein Substrat umfasst, das mit einem Produkt, wie es in Anspruch 12 oder Anspruch 13 beansprucht ist, beschichtet ist.

## Revendications

1. Procédé de préparation d'un produit qui est un gel d'oxyde métallique, ledit procédé comprenant les étapes consistant à :
(a) chauffer un mélange d'oxyde métallique hydraté humide et soit :
(i) d'un acide hydrolytique ; soit
(ii) d'un sel métallique ;
de manière à former un gel humide ;
(b) chauffer le gel humide dans une atmosphère de pression contrôlée à la température de décomposition appropriée de l'acide ou du sel ; et
(c) éliminer tout produit qui ne puisse pas être dispersé.

2. Procédé selon la revendication 1, **caractérisé en ce que** le sel métallique est un nitrate de métal.

3. Procédé selon l'une quelconque des revendications précédentes, **caractérisé en ce que** le gel humide est formé en chauffant le mélange d'oxyde métallique hydraté à une température comprise entre la température ambiante et 120°C.

4. Procédé selon l'une quelconque des revendications précédentes, **caractérisé en ce que** le gel humide est formé en chauffant le mélange d'oxyde métallique hydraté pendant une durée comprise entre 1 et 24 heures.

5. Procédé selon l'une quelconque des revendications précédentes, **caractérisé en ce que** l'atmosphère contrôlée est fournie au moyen d'une cuve de réacteur à pression.

6. Procédé selon l'une quelconque des revendications précédentes, **caractérisé en ce que** le gel humide est chauffé pendant une période comprise entre 20 et 75 minutes.

7. Procédé selon l'une quelconque des revendications précédentes, **caractérisé en ce que** le gel humide est chauffé à une vitesse de chauffage comprise entre 175 et 225°C par heure.

8. Procédé selon l'une quelconque des revendications précédentes, **caractérisé en ce que** le produit ne pouvant être dispersé est éliminé en :
(a) dispersant le gel d'oxyde métallique formé par chauffage du gel humide dans un solvant de manière à former un sol ;
(b) éliminant tout sédiment ne pouvant pas être dispersé ; et
(c) séchant le sol.

9. Procédé selon la revendication 8, **caractérisé en ce que** le gel d'oxyde métallique est refroidi dans une atmosphère contrôlée inférieure à 60°C avant la dispersion.

10. Procédé selon la revendication 8 ou la revendication 9, **caractérisé en ce que** le solvant est aqueux.

11. Procédé selon l'une quelconque des revendications 8 à 10, **caractérisé en ce que** le sol est séché entre 20 et 125°C.

12. Produit qui est un gel d'oxyde métallique nanocrystallin essentiellement dispersible susceptible d'être obtenu par un procédé selon l'une quelconque des revendications 1 à 11, à condition que le produit ne soit pas une solution solide d'oxyde d'étain contenant de l'antimoine

13. Produit qui est un gel d'oxyde métallique nanocrystallin essentiellement dispersible, à condition que le produit ne soit pas une solution solide d'oxyde d'étain contenant de l'antimoine.

14. Procédé de formation d'une solution solide d'oxyde métallique, ledit procédé comprenant le chauffage d'un produit selon la revendication 12 ou la revendication 13.

15. Utilisation d'un produit selon la revendication 12 ou la revendication 13 dans la fabrication d'une solution solide d'un oxyde métallique.

16. Procédé de formation d'un catalyseur, ledit procédé comprenant une dispersion d'un produit selon la revendication 12 ou la revendication 13 sur support de catalyseur.

17. Utilisation d'un produit tel que revendiqué dans la revendication 12 ou la revendication 13 dans la fabrication d'un catalyseur.

18. Catalyseur comprenant un produit selon la revendication 12 ou la revendication 13 et un support de catalyseur.

19. Utilisation d'un produit selon la revendication 12 ou la revendication 13 dans la fabrication d'une cellule de combustible.

20. Utilisation d'un produit selon la revendication 12 ou la revendication 13 pour revêtir ou imprégner un substrat.

21. Matériau stratifié comprenant un substrat enduit d'un produit tel que revendiqué dans la revendication 12 ou la revendication
